# FASCICULE DE BREVET EUROPEEN

(11) **EP 3 660 299 B1**
(45) Date de publication et mention de la délivrance du brevet: **09.06.2021**
(21) Numéro de dépôt: 19207535.6
(22) Date de dépôt: 06.11.2019
(51) Int. Cl.: F02K 1/34, F02C 7/045, F02C 7/24, F02K 1/82, G10K 11/172, B64D 33/02, B64D 33/04, G10K 11/168

(54) **STRUCTURE D'ABSORPTION ACOUSTIQUE COMPRENANT UN SYSTÈME DE DRAINAGE DE LIQUIDE ET ENSEMBLE PROPULSIF COMPORTANT UNE TELLE STRUCTURE D'ABSORPTION ACOUSTIQUE**
AKUSTISCHE ABSORPTIONSSTRUKTUR, DIE EIN FLÜSSIGKEITSDRÄNAGESYSTEM UMFASST, ANTRIEBSEINHEIT, DIE EINE SOLCHE AKUSTISCHE ABSORPTIONSSTRUKTUR UMFASST
STRUCTURE FOR ACOUSTIC ABSORPTION INCLUDING A SYSTEM FOR DRAINING LIQUID AND PROPULSION ASSEMBLY COMPRISING SUCH A STRUCTURE FOR ACOUSTIC ABSORPTION

(30) Priorité: 28.11.2018 FR 1871982
(43) Date de publication de la demande: 03.06.2020
(73) Titulaire: Airbus Operations, 31060 Toulouse (FR)
(72) Inventeur: BROSSARD, Denis, 44860 Saint Aignan de Gand Lieu (FR); COUSIN, Antoine, 31240 l'Union (FR); CAZEAUX, Laurent, 31170 Tournefeuille (FR); RAVISE, Florian, 44800 Saint-Herblain (FR); CALIMAN, Laurent, 31000 Toulouse (FR); CZAPLA, Lionel, 31700 Cornebarrieu (FR); MAFFRE, Claire, 32600 Lias (FR); GAILLARDO, Jérôme, 31270 Cugnaux (FR)
(74) Mandataire: Fantin, Laurent

(56) Documents cités:
- FR-A1- 3 055 662
- US-A- 5 315 820
- US-A- 5 462 331
- US-A1- 2013 186 707
- REDMANN DANIEL ET AL: "Aero-acoustic liner applications of the broadband special acoustic absorber concept", 19TH AIAA/CEAS AEROACOUSTICS CONFERENCE, BERLIN GERMANY, BERLIN, GERMANY, 27 - 29 MAY 2013, AMERICAN INSTITUTE OF AERONAUTICS AND ASTRONAUTICS, BERLIN, GERMANY , no. AIAA 2013-2176 27 mai 2013 (2013-05-27), pages 2626-2637, XP009515941, DOI: 10.2514/6.2013-2176 ISBN: 978-1-62410-213-4 Extrait de l'Internet: URL:http://arc.aiaa.org/doi/10.2514/6.2013 -2176 [extrait le 2013-05-24]

## Description

La présente demande se rapporte à une structure d'absorption acoustique comprenant un système de drainage de liquide ainsi qu'à un ensemble propulsif comportant une telle structure d'absorption acoustique.

Selon un mode de réalisation de l'art antérieur, un ensemble propulsif comprend une nacelle ainsi qu'une turbomachine double flux, positionnée à l'intérieur de la nacelle et présentant, à l'arrière, un conduit d'éjection primaire par lequel sont évacués les gaz brûlés issus de la combustion. Ce conduit d'éjection primaire comprend, au niveau de sa peau, une structure d'absorption acoustique pour atténuer le bruit sur plusieurs bandes de fréquences, comme par exemple les bruits liés à la combustion (300-1000Hz) et les bruits liés au fonctionnement de la turbine (supérieurs ou égaux à 4000Hz). Des exemples de structures d'absorption acoustique sont décrites dans les documents US5315820 et US5462331.

Une telle structure d'absorption acoustique est décrite dans les documents FR-3.055.662 et « aero-acoustic liner applications of the broadband special acoustic absorber concept, American Institute of Aeronautics and Astronautics, AIAA 2013-2176, 19th AIAA/CEAS Aeroacoustics Conference May 27-29, 2013, Berlin, Germany ». Elle comprend une pluralité de capsules fermées par la peau du conduit primaire d'éjection de sorte à délimiter chacune une cavité dans laquelle est positionné un cône creux tronqué, distant de la capsule, qui présente une base débouchant au niveau de la peau du conduit primaire d'éjection. Chaque cône comprend au moins un orifice, permettant de faire communiquer l'intérieur du cône avec l'espace entre le cône et la capsule, positionné et dimensionné en fonction des caractéristiques acoustiques recherchées. En complément, la peau du conduit d'éjection primaire est poreuse au droit de chaque cône.

Une structure proche est également décrite dans le document US2013186707.

Une structure d'absorption acoustique ainsi formée, basée sur le même principe qu'un résonateur de Helmholtz et qu'un résonateur quart d'onde, permet d'atténuer efficacement les sons basses fréquences émis par la turbomachine.

La peau du conduit d'éjection primaire étant poreuse au droit des cônes et ces derniers étant perforés, l'eau ou tout autre liquide peut s'accumuler et stagner, en fonctionnement, à l'intérieur de chaque cône et dans l'espace délimité par chaque cône et sa capsule. Cette accumulation d'eau ou de liquide altère le bon fonctionnement de la structure d'absorption acoustique. De plus, en cas de gel, l'eau transformée en glace peut endommager la structure d'absorption acoustique.

La présente invention vise à remédier à tout ou partie des inconvénients de l'art antérieur.

A cet effet, l'invention a pour objet une structure d'absorption acoustique comprenant une pluralité de résonateurs, positionnés contre une surface interne d'une peau, comprenant chacun :
- une première enceinte qui présente une première embouchure délimitée par un bord plaqué contre la surface intérieure de la peau de sorte que la première enceinte et la peau délimitent une première cavité,
- une deuxième enceinte dans laquelle est positionnée la première enceinte, au moins partiellement espacée de la première enceinte, qui délimite avec la première enceinte une deuxième cavité,
- au moins un orifice acoustique traversant la première enceinte pour faire communiquer les première et deuxième cavités,
- une zone poreuse, formant une partie de la peau, permettant de faire communiquer avec la première cavité, en fonctionnement, un milieu dans lequel se propagent des ondes sonores.

Selon l'invention, la première enceinte comprend une première paroi latérale qui présente un premier bord formant la première embouchure ainsi qu'au moins un orifice de drainage traversant la première enceinte, positionné sur la première paroi latérale, à proximité du premier bord de la première paroi latérale, la deuxième enceinte comprenant au moins un trou de drainage traversant la deuxième enceinte, chaque orifice de drainage et chaque trou de drainage étant configurés pour limiter une accumulation de fluide dans le résonateur.

Cette solution permet de fortement réduire le volume de fluides susceptible de stagner dans le résonateur, limitant les risques d'endommagement du résonateur et d'altération de son bon fonctionnement sur le plan du traitement acoustique.

Selon un premier mode de réalisation, la première enceinte comprend un unique orifice de drainage et le résonateur est orienté de sorte que l'orifice de drainage soit situé à proximité ou au niveau d'un point le plus bas de la première paroi latérale.

Selon un deuxième mode de réalisation, la première enceinte comprend plusieurs orifices de drainage répartis sur toute la périphérie de la première paroi latérale.

Selon une configuration la première enceinte comprend un nombre d'orifices de drainage compris entre 4 et 12 et/ou chaque orifice de drainage présente un diamètre compris entre 0,8 et 2 mm.

Selon une autre caractéristique, la deuxième enceinte comprend une deuxième paroi latérale, délimitée par un premier bord orienté vers la peau et un deuxième bord, et une deuxième paroi de fond positionnée au niveau du deuxième bord de la deuxième paroi latérale, chaque trou de drainage étant positionné sur la deuxième paroi de fond, à proximité de la deuxième paroi latérale.

Selon le premier mode de réalisation, la deuxième enceinte comprend un unique trou de drainage et le résonateur est orienté de sorte que le trou de drainage soit situé à proximité ou au niveau d'un point le plus bas de la deuxième paroi de fond.

Selon le deuxième mode de réalisation, la deuxième enceinte comprend plusieurs trous de drainage répartis sur toute la périphérie de la deuxième paroi de fond.

Selon une configuration, la deuxième enceinte comprend un nombre de trous de drainage compris entre 4 et 12 et/ou chaque trou de drainage présente un diamètre compris entre 0,8 et 2 mm.

Selon une autre caractéristique, les première et deuxième enceintes présentant un même axe de révolution (Ax), chaque orifice de drainage est sécant avec un plan longitudinal contenant l'axe de révolution (Ax) également sécant avec un trou de drainage.

L'invention a également pour objet un ensemble propulsif d'aéronef ou un aéronef comprenant une structure d'absorption acoustique selon l'une des caractéristiques précédentes.

D'autres caractéristiques et avantages ressortiront de la description de l'invention qui va suivre, description donnée à titre d'exemple uniquement, en regard des dessins annexés parmi lesquels :
- Fig. 1 est une vue latérale d'un aéronef,
- Fig. 2 est une vue en perspective d'un conduit d'éjection primaire comprenant une structure d'absorption acoustique qui illustre une application de l'invention,
- Fig. 3 est une vue de dessus, depuis l'intérieur du conduit d'éjection primaire, d'une partie de la peau du conduit visible sur la figure 2,
- Fig. 4 est une coupe en perspective d'une partie d'un conduit d'éjection primaire équipé d'un structure d'absorption acoustique qui illustre un mode de réalisation de l'invention,
- Fig. 5 est une vue en perspective d'un résonateur d'une structure d'absorption acoustique (sans la peau) qui illustre un premier mode de réalisation de l'invention,
- Fig. 6 est une vue en perspective d'une première enceinte du résonateur visible sur la figure 5,
- Fig. 7 est une vue en perspective d'une deuxième enceinte du résonateur visible sur la figure 5,
- Fig. 8 est une coupe du résonateur, visible sur la figure 5, positionné en partie supérieure d'un conduit qui illustre le premier mode de réalisation,
- Fig. 9 est une coupe du résonateur, visible sur la figure 5, positionné en partie inférieure d'un conduit qui illustre le premier mode de réalisation,
- Fig. 10 est une vue en perspective d'un résonateur d'une structure d'absorption acoustique (sans la peau) qui illustre un deuxième mode de réalisation de l'invention,
- Fig. 11 est une vue en perspective d'une première enceinte du résonateur visible sur la figure 10,
- Fig. 12 est une vue en perspective d'une deuxième enceinte du résonateur visible sur la figure 10,
- Fig. 13 est une coupe du résonateur, visible sur la figure 10, positionné en partie supérieure d'un conduit qui illustre le deuxième mode de réalisation,
- Fig. 14 est une coupe du résonateur, visible sur la figure 10, positionné en partie inférieure d'un conduit qui illustre le deuxième mode de réalisation,
- Fig. 15 est une vue en perspective d'un résonateur qui illustre un mode de réalisation, et
- Fig. 16 est une coupe du résonateur visible sur la figure 15.

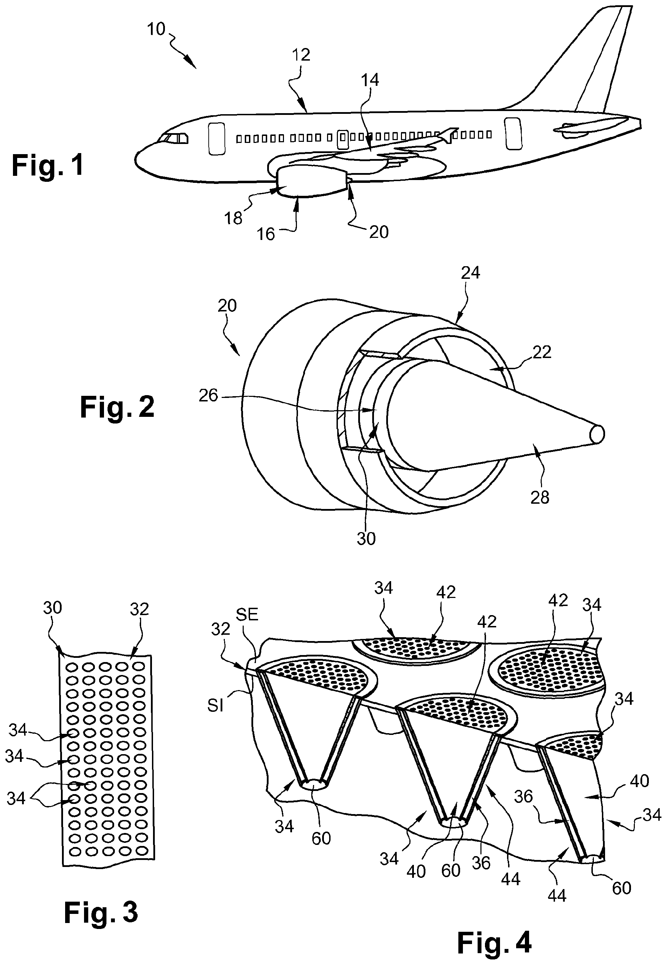

Sur la figure 1, on a représenté un aéronef 10 qui présente un fuselage 12, deux ailes 14, disposées de part et d'autre du fuselage 12, et des ensembles propulsifs 16 fixés sous les ailes 14. Chaque ensemble propulsif 16 comprend une nacelle 18 et une turbomachine 20 positionnée à l'intérieur de la nacelle 18.

Selon un mode de réalisation, la turbomachine 20 comprend, à l'arrière, un conduit d'éjection primaire 22, par lequel s'échappent des gaz brûlés dans la turbomachine 20, qui est délimité à l'extérieur par une tuyère primaire 24 et à l'intérieur par une structure interne 26 prolongée par un cône de tuyère 28.

Selon une configuration, la structure interne 26 comprend une structure d'absorption acoustique 30, positionnée contre une peau 32, qui délimite le conduit d'éjection primaire 22 et qui présente sur surface extérieure SE, en contact avec les gaz brûlés, et une surface intérieure SI, opposée à la surface extérieure SE.

Bien que décrite appliquée à un conduit d'éjection primaire 22, l'invention n'est pas limitée à cette application. Ainsi, la structure d'absorption acoustique 30 peut être positionnée au niveau de toute peau 32 qui présente une surface extérieure SE en contact avec un milieu dans lequel se propagent des ondes sonores et une surface intérieure SI opposée à la surface SE.

La structure d'absorption acoustique 30 comprend, en plus de la peau 32, une pluralité de résonateurs 34 positionnés contre la surface interne SI de la peau 32. Selon une configuration, les résonateurs 34 peuvent être positionnés dans au moins une structure alvéolaire, de type nid d'abeilles par exemple, plaquée contre la surface intérieure SI. Chaque résonateur 34 comprend :
- une première enceinte 36, également appelée cône, qui présente une première embouchure 38 délimitée par un bord plaqué contre la surface intérieure SI de la peau 32 de sorte que la première enceinte 36 et la peau 32 délimitent une première cavité 40,
- une deuxième enceinte 44, également appelée capsule, dans laquelle est positionnée la première enceinte 36, au moins partiellement espacée de la première enceinte 36, qui présente une deuxième embouchure 46 délimitée par un bord plaqué contre la première enceinte 36 (ou éventuellement la surface intérieure SI de la peau 32) de sorte que la deuxième enceinte 44 et la première enceinte 36 (et éventuellement la peau 32) délimitent une deuxième cavité 48,
- au moins un orifice acoustique 50 traversant la première enceinte 36 pour faire communiquer les première et deuxième cavités 40, 48,
- une zone poreuse 42, formant une partie de la peau 32, permettant de faire communiquer avec la première cavité 40 le milieu dans lequel se propagent les ondes sonores.

Selon un agencement visible sur la figure 3, les résonateurs 34 sont agencés selon plusieurs lignes et plusieurs colonnes.

Selon un mode de réalisation, les première et deuxième embouchures 38, 46 ont chacune une section en forme de disque et la zone poreuse 42 a une section approximativement identique à celle de la première embouchure 38.

Chaque première enceinte 36 est tronconique et comprend :
- une première paroi latérale 52 tronconique, délimitée par un premier bord 52.1, formant la première embouchure 38 et orienté vers la peau 32, et par un deuxième bord 52.2 opposé et approximativement parallèle au premier bord 52.1,
- une première paroi de fond 54 plate, approximativement parallèle à la peau 32, positionnée au niveau du deuxième bord 52.2 de la première paroi latérale 42, et
- une collerette 56, positionnée au niveau du premier bord 52.1 de la première paroi latérale 52, à l'extérieur de la première paroi latérale 52 et plaquée contre la surface intérieure SI de la peau 32.

Chaque deuxième enceinte 44 est tronconique et comprend :
- une deuxième paroi latérale 58 tronconique, délimitée par un premier bord 58.1, formant la deuxième embouchure 46, orienté vers la peau 32 et plaqué contre la collerette 56 de la première enceinte 36, et par un deuxième bord 58.2 opposé et approximativement parallèle au premier bord 58.1,
- une deuxième paroi de fond 60 plate, approximativement parallèle à la peau 32, positionnée au niveau du deuxième bord 58.2 de la deuxième paroi latérale 58.

Selon une configuration, la première enceinte 36 est approximativement centrée dans la deuxième enceinte 44 et les première et deuxième parois de fond 54, 60 sont espacées. L'orifice acoustique 50 est positionné au niveau de la première paroi de fond 54 de la première enceinte 36. Il est configuré en fonction d'au moins une caractéristique acoustique recherchée.

Bien entendu, l'invention n'est pas limitée à cet agencement pour les résonateurs 34 et/ou à ces géométries et configurations pour les première et deuxième enceintes 36, 44.

Selon une caractéristique de l'invention, la première enceinte 36 comprend au moins un orifice de drainage 62, traversant la première enceinte 36 pour faire communiquer la première cavité 40 et la deuxième cavité 48, et la deuxième enceinte 44 comprend au moins un trou de drainage 64 traversant la deuxième enceinte 44 pour faire communiquer la deuxième cavité 48 et l'extérieur du résonateur 34. Chaque orifice de drainage 62 et chaque trou de drainage 64 sont configurés pour limiter l'accumulation de fluide et d'éventuelles particules solides dans le résonateur 34. Le volume de fluides susceptible de stagner dans le résonateur 34 étant très faible, il ne perturbe pas le bon fonctionnement du résonateur 34 sur le plan du traitement acoustique et ne risque pas de l'endommager.

Le (ou les) orifice(s) de drainage 62 est (ou sont) différent(s) de l'orifice acoustique 50 afin de toujours laisser libre le passage d'air au travers de l'orifice acoustique 50 afin de permettre le fonctionnement en résonateur.

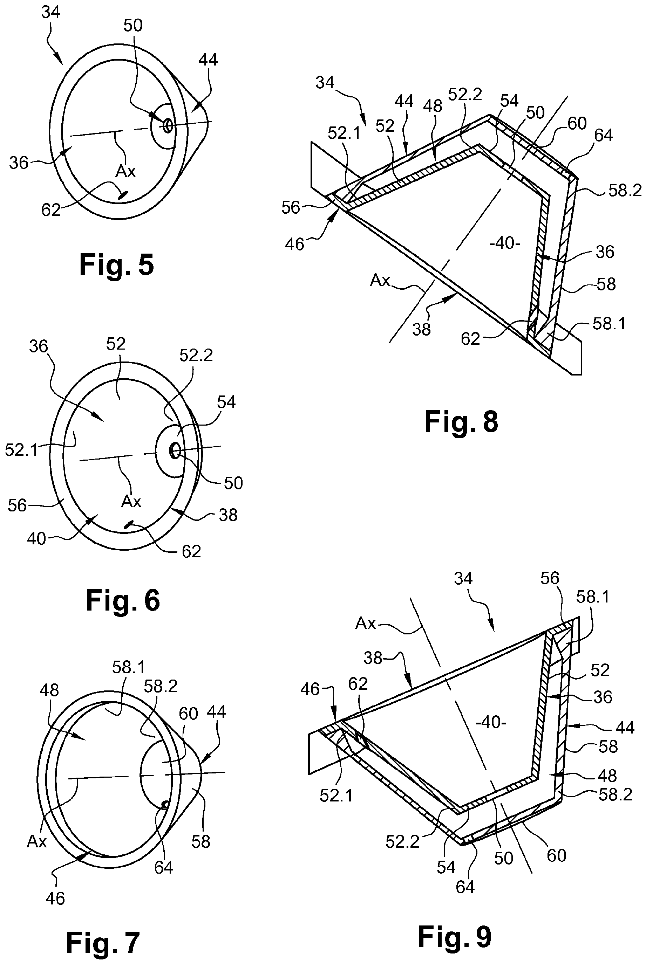

Selon un premier mode de réalisation visible sur les figures 5 à 9, la première enceinte 36 comprend un unique orifice de drainage 62, positionné en fonction de l'orientation du résonateur 34 de manière à limiter l'accumulation de liquide dans la première cavité 40. En complément, la deuxième enceinte 44 comprend un unique trou de drainage 64, positionné en fonction de l'orientation du résonateur 34 de manière à limiter l'accumulation de liquide dans la deuxième cavité 48.

Selon une configuration, l'unique orifice de drainage 62 est positionné sur la première paroi latérale 52, à proximité du premier bord 52.1 de la première paroi latérale 52. L'unique trou de drainage 64 est positionné sur la deuxième paroi de fond 60, à proximité du deuxième bord 58.2 de la deuxième paroi latérale 58. Les première et deuxième enceintes 36, 44 étant tronconiques, coaxiales et présentant un même axe de révolution Ax, l'orifice de drainage 62 et le trou de drainage 64 sont sécants avec un même plan longitudinal contenant l'axe de révolution Ax.

Selon ce premier mode de réalisation, chaque résonateur 34 doit être correctement positionné en fonction des positions de l'orifice de drainage 62 et du trou de drainage 64, comme illustré sur les figures 8 et 9.

Selon une première orientation visible sur la figure 8, lorsque le résonateur 34 comprend des première et deuxième embouchures 38, 46 positionnées à une altitude inférieure à celles des première et deuxième parois de fond 54, 60, les fluides s'écoulent via l'orifice de drainage 62 puis via la zone poreuse 42 de la peau 32. Selon cette première orientation, le résonateur 34 est orienté de sorte que l'orifice de drainage 62 soit situé à proximité ou au niveau d'un point le plus bas de la première paroi latérale 52.

Selon une deuxième orientation visible sur la figure 9, lorsque le résonateur 34 comprend des première et deuxième embouchures 38, 46 positionnées à une altitude supérieure à celles des première et deuxième parois de fond 54, 60, les fluide s'écoulent via l'orifice acoustique 50 puis via le trou de drainage 64. Selon cette deuxième orientation, le résonateur 34 est orienté de sorte que le trou de drainage 64 soit situé à proximité ou au niveau d'un point le bas de la deuxième paroi de fond 60.

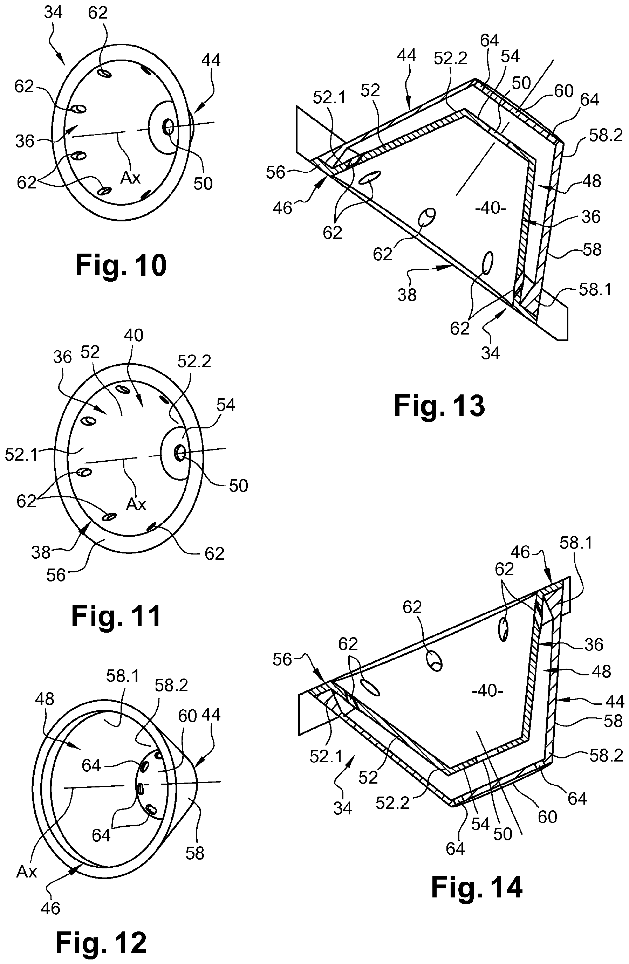

Selon un deuxième mode de réalisation visible sur les figures 10 à 14, la première enceinte 36 comprend plusieurs orifices de drainage 62, positionnés sur la première paroi latérale 52, à proximité du premier bord 52.1 de la première paroi latérale 52, régulièrement répartis sur toute la périphérie de la première paroi latérale 52. En complément, la deuxième enceinte 44 comprend plusieurs trous de drainage 64, positionnés sur la deuxième paroi de fond 60, à proximité du deuxième bord 58.2 de la deuxième paroi latérale 58, régulièrement répartis sur toute la périphérie de la paroi de fond 60.

Selon une configuration visible sur les figures 10 à 14, le résonateur 34 comprend huit orifices de drainage 62 et huit trous de drainage 64. Les première et deuxième enceintes 36, 44 étant tronconiques, coaxiales et présentant un même axe de révolution Ax, chaque orifice de drainage 62 est sécant avec un plan longitudinal contenant l'axe de révolution Ax également sécant avec un trou de drainage 64.

Selon le deuxième mode de réalisation, les orifices de drainage 62 étant régulièrement répartis sur toute la périphérie de la première paroi latérale 52, quel que soit l'orientation du résonateur 34, l'un d'eux est nécessairement positionné à proximité du point le plus bas de la première paroi latérale 52, comme illustré sur la figure 14. De plus, les trous de drainage 64 étant régulièrement répartis sur toute la périphérie de la deuxième paroi de fond 60, l'un d'eux est nécessairement positionné à proximité du point le plus bas de la deuxième paroi de fond 60, comme illustré sur la figure 13.

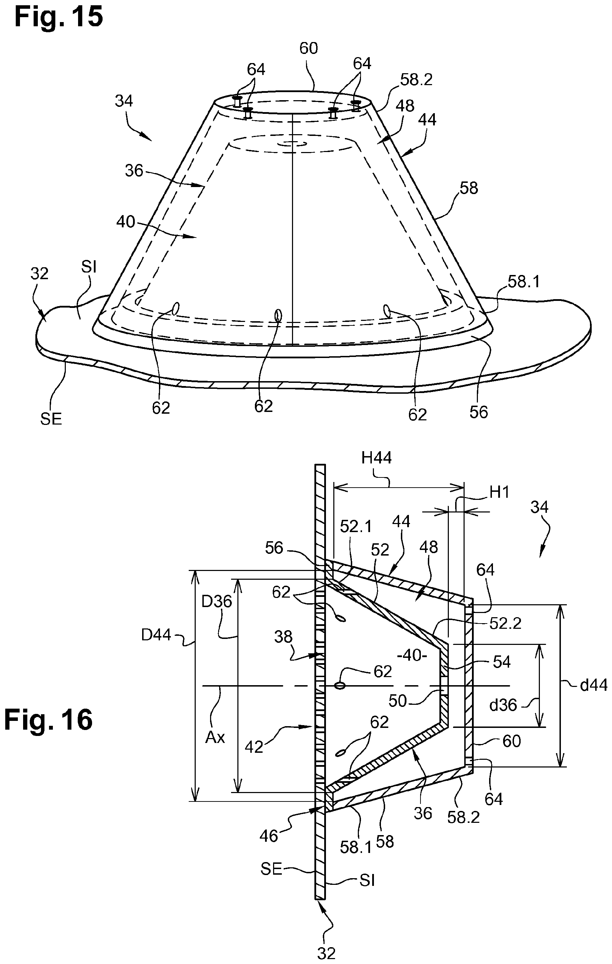

Le nombre d'orifices de drainage 62 peut ne pas être identique à celui des trous de drainage 64. Selon un troisième mode de réalisation visible sur les figures 15 et 16, le résonateur 34 comprend huit orifices de drainage 62 et quatre trous de drainage 64.

Selon un mode de réalisation, les orifices de drainage 62 et/ou les trous de drainage 64 sont cylindriques ou oblongs et présentent des axes parallèles à l'axe de révolution Ax.

A titre d'exemple, pour donner un ordre de grandeur, la première enceinte 36 a un petit diamètre d36 (au niveau de sa petite base) de l'ordre de 15 mm, un grand diamètre D36 (au niveau de sa grande base) de l'ordre de 40 mm et forme un angle solide de l'ordre de 60°. La deuxième enceinte 44 a un petit diamètre d44 (au niveau de sa petite base) compris entre 17 et 42 mm, un grand diamètre D44 (au niveau de sa grande base) compris entre 43 et 45 mm, une hauteur H44 de l'ordre de 25 mm, la différence de hauteur H1 entre les première et deuxième enceintes 36, 44 étant de l'ordre de 4 mm.

Le nombre d'orifices de drainage 62 est compris entre 4 et 12 et chacun d'eux présente un diamètre de compris entre 0,8 mm et 2 mm. Le nombre de trous de drainage 64 est compris entre 4 à 12 et chacun d'eux présente un diamètre compris entre 0,8 mm et 2 mm.

On notera que les orifices de drainage 62 contribuent à la performance acoustique de la technologie. Chaque orifice de drainage 62 est configuré de sorte que la somme des sections des orifices de drainage 62 et de l'orifice acoustique 50 réponde à l'exigence acoustique en fonction de la fréquence visée.

## Revendications

1. Structure d'absorption acoustique comprenant une pluralité de résonateurs (34), positionnés contre une surface interne (SI) d'une peau (32), comprenant chacun :
- une première enceinte (36) qui présente une première embouchure (38) délimitée par un bord plaqué contre la surface intérieure (SI) de la peau (32) de sorte que la première enceinte (36) et la peau (32) délimitent une première cavité (40),
- une deuxième enceinte (44) dans laquelle est positionnée la première enceinte (36), au moins partiellement espacée de la première enceinte (36), qui délimite avec la première enceinte (36) une deuxième cavité (48),
- au moins un orifice acoustique (50) traversant la première enceinte (36) pour faire communiquer les première et deuxième cavités (40, 48),
- une zone poreuse (42), formant une partie de la peau (32), permettant de faire communiquer avec la première cavité (40), en fonctionnement, un milieu dans lequel se propagent des ondes sonores, la première enceinte (36) comprenant une première paroi latérale (52) qui présente un premier bord (52.1) formant la première embouchure (38), **caractérisée en ce que** la prémière enceinte (36) présente au moins un orifice de drainage (62) traversant la première enceinte (36), positionné sur la première paroi latérale (52), à proximité du premier bord (52.1) de la première paroi latérale (52), et **en ce que** la deuxième enceinte (44) comprend au moins un trou de drainage (64) traversant la deuxième enceinte (44), chaque orifice de drainage (62) et chaque trou de drainage (64) étant configurés pour limiter une accumulation de fluide dans le résonateur (34).

2. Structure d'absorption acoustique selon la revendication 1, **caractérisée en ce que** la première enceinte (36) comprend un unique orifice de drainage (62) et **en ce que** le résonateur (34) est orienté de sorte que l'orifice de drainage (62) soit situé à proximité ou au niveau d'un point le plus bas de la première paroi latérale (52) de manière à limiter l'accumulation de liquide dans la première cavité (40) en fonctionnement.

3. Structure d'absorption acoustique selon la revendication 1, **caractérisée en ce que** la première enceinte (36) comprend plusieurs orifices de drainage (62) répartis sur toute la périphérie de la première paroi latérale (52).

4. Structure d'absorption acoustique selon la revendication précédente, **caractérisée en ce que** la première enceinte (36) comprend un nombre d'orifices de drainage (62) compris entre 4 et 12.

5. Structure d'absorption acoustique selon l'une des revendications 3 à 4, **caractérisé en ce que** chaque orifice de drainage (62) présente un diamètre compris entre 0,8 et 2 mm.

6. Structure d'absorption acoustique selon l'une des revendications précédentes, **caractérisée en ce que** la deuxième enceinte (44) comprend une deuxième paroi latérale (58), délimitée par un premier bord (58.1) orienté vers la peau (32) et un deuxième bord (58.2), et une deuxième paroi de fond (60) positionnée au niveau du deuxième bord (58.2) de la deuxième paroi latérale (58) et **en ce que** chaque trou de drainage (64) est positionné sur la deuxième paroi de fond (60), à proximité de la deuxième paroi latérale (58).

7. Structure d'absorption acoustique selon la revendication 6, **caractérisée en ce que** la deuxième enceinte (44) comprend un unique trou de drainage (64) et **en ce que** le résonateur (34) est orienté de sorte que le trou de drainage (64) soit situé à proximité ou au niveau d'un point le plus bas de la deuxième paroi de fond (60) de manière à limiter l'accumulation de liquide dans la deuxième cavité (48) en fonctionnement.

8. Structure d'absorption acoustique selon la revendication 6, **caractérisée en ce que** la deuxième enceinte (44) comprend plusieurs trous de drainage (64) répartis sur toute la périphérie de la deuxième paroi de fond (60).

9. Structure d'absorption acoustique selon la revendication précédente, **caractérisée en ce que** la deuxième enceinte (44) comprend un nombre de trous de drainage (64) compris entre 4 et 12.

10. Structure d'absorption acoustique selon l'une des revendications 6 à 9, **caractérisée en ce que** chaque trou de drainage (64) présente un diamètre compris entre 0,8 et 2 mm.

11. Structure d'absorption acoustique selon l'une des revendications précédentes, **caractérisée en ce que** les première et deuxième enceintes (36, 44) présentent un même axe de révolution (Ax) et **en ce que** chaque orifice de drainage (62) est sécant avec un plan longitudinal contenant l'axe de révolution (Ax) également sécant avec un trou de drainage (64).

12. Ensemble propulsif d'aéronef comprenant une structure d'absorption acoustique selon l'une des revendications précédentes.

13. Aéronef comprenant une structure d'absorption acoustique selon l'une des revendications 1 à 11.

## Patentansprüche

1. Schalldämpfende Struktur mit einer Vielzahl von Resonatoren (34), die an einer Innenfläche (SI) einer Haut (32) angeordnet sind und jeweils umfassen:
- ein erstes Gehäuse (36) mit einer ersten Öffnung (38), die durch einen gegen die Innenfläche (SI) der Haut (32) gesetzten Rand begrenzt ist, so dass das erste Gehäuse (36) und die Haut (32) einen ersten Hohlraum (40) bilden,
- ein zweites Gehäuse (44), in dem das erste Gehäuse (36) angeordnet ist und das zumindest teilweise von dem ersten Gehäuse (36) beabstandet ist sowie zusammen mit dem ersten Gehäuse (36) einen zweiten Hohlraum (48) bildet,
- wenigstens eine akustische Öffnung (50), die durch das erste Gehäuse (36) verläuft, um den ersten und zweiten Hohlraum (40, 48) zu verbinden,
- einen porösen Bereich (42), der einen Teil der Haut (32) bildet und der es einem Medium, in dem sich Schallwellen ausbreiten, ermöglicht, im Betrieb mit dem ersten Hohlraum (40) in Verbindung zu stehen, wobei das erste Gehäuse (36) eine erste Seitenwand (52) umfasst, die einen ersten Rand (52.1) aufweist, die die erste Öffnung (38) bildet, **dadurch gekennzeichnet, dass** das erste Gehäuse (36) wenigstens eine Abflussöffnung (62) umfasst, die durch das erste Gehäuse (36) verläuft und die an der ersten Seitenwand (52) in der Nähe des ersten Rands (52.1) der ersten Seitenwand (52) angeordnet ist, und dass das zweite Gehäuse (44) wenigstens ein Abflussloch (64) umfasst, das durch das zweite Gehäuse (44) verläuft, wobei jede Abflussöffnung (62) und jedes Abflussloch (64) so eingerichtet sind, dass sie eine Ansammlung von Flüssigkeit in dem Resonator (34) begrenzen.

2. Schalldämpfende Struktur nach Anspruch 1, **dadurch gekennzeichnet, dass** das erste Gehäuse (36) eine einzige Abflussöffnung (62) aufweist und dass der Resonator (34) so ausgerichtet ist, dass sich die Abflussöffnung (62) in der Nähe oder an einem tiefsten Punkt der ersten Seitenwand (52) befindet, um auf diese Weise beim Betrieb die Ansammlung von Flüssigkeit im ersten Hohlraum (40) zu begrenzen.

3. Schalldämpfende Struktur nach Anspruch 1, **dadurch gekennzeichnet, dass** das erste Gehäuse (36) eine Vielzahl von Abflussöffnungen (62) aufweist, die über den gesamten Umfang der ersten Seitenwand (52) verteilt sind.

4. Schalldämpfende Struktur nach dem vorhergehenden Anspruch, **dadurch gekennzeichnet, dass** das erste Gehäuse (36) eine zwischen 4 und 12 liegende Anzahl von Abflussöffnungen (62) aufweist.

5. Schalldämpfende Struktur nach einem der Ansprüche 3 bis 4, **dadurch gekennzeichnet, dass** jede Abflussöffnung (62) einen Durchmesser zwischen 0,8 und 2 mm aufweist.

6. Schalldämpfende Struktur nach einem der vorhergehenden Ansprüche, **dadurch gekennzeichnet, dass** das zweite Gehäuse (44) eine zweite Seitenwand (58)umfasst, die durch einen zur Haut (32) hin ausgerichteten ersten Rand (58.1) und durch einen zweiten Rand (58.2) begrenzt ist, und eine zweite Bodenwand (60) aufweist, die im Bereich des zweiten Randes (58.2) der zweiten Seitenwand (58) angeordnet ist, und dass jedes Abflussloch (64) auf der zweiten Bodenwand (60) in der Nähe der zweiten Seitenwand (58) angeordnet ist.

7. Schalldämpfende Struktur nach Anspruch 6, **dadurch gekennzeichnet, dass** das zweite Gehäuse (44) ein einziges Abflussloch (64) aufweist und dass der Resonator (34) so ausgerichtet ist, dass sich das Abflussloch (64) in der Nähe oder an einem tiefsten Punkt der zweiten Bodenwand (60) befindet, um auf diese Weise beim Betrieb die Ansammlung von Flüssigkeit in dem zweiten Hohlraum (48) zu begrenzen.

8. Schalldämpfende Struktur nach Anspruch 6, **dadurch gekennzeichnet, dass** das zweite Gehäuse (44) mehrere Abflusslöcher (64) aufweist, die über den gesamten Umfang der zweiten Bodenwand (60) verteilt sind.

9. Schalldämpfende Struktur nach dem vorhergehenden Anspruch, **dadurch gekennzeichnet, dass** das zweite Gehäuse(44) eine zwischen 4 und 12 liegende Anzahl von Abflusslöchern (64) aufweist.

10. Schalldämpfende Struktur nach einem der Ansprüche 6 bis 9, **dadurch gekennzeichnet, dass** jedes Abflussloch (64) einen Durchmesser zwischen 0,8 und 2 mm aufweist.

11. Schalldämpfende Struktur nach einem der vorhergehenden Ansprüche, **dadurch gekennzeichnet, dass** das erste und das zweite Gehäuse (36, 44) die gleiche Drehachse (Ax) haben und dass jede Abflussöffnung (62) eine Längsebene schneidet, die die Drehachse (Ax) enthält und auch ein Abflussloch (64) schneidet.

12. Flugzeugantriebsanordnung mit einer schalldämpfenden Struktur nach einem der vorhergehenden Ansprüche.

13. Luftfahrzeug mit einer schalldämpfenden Struktur nach einem der Ansprüche 1 bis 11.

## Claims

1. Acoustic absorption structure including a plurality of resonators (34) that are positioned against an internal surface (SI) of a skin (32), each comprising:
- a first enclosure (36) that has a first opening (38) delimited by an edge that is pressed against the internal surface (SI) of the skin (32) in such a way that the first enclosure (36) and the skin (32) delimit a first cavity (40),
- a second enclosure (44) in which the first enclosure (36) is positioned, which is at least partially spaced apart from the first enclosure (36), and which delimits, with the first enclosure (36), a second cavity (48),
- at least one acoustic orifice (50) that passes through the first enclosure (36) so as to establish a communication between the first and second cavities (40, 48),
- a porous region (42) which forms part of the skin (32) and by which it is possible, during operation, to make a medium in which soundwaves propagate communicate with the first cavity (40),
the first enclosure (36) comprising a first lateral wall (52) which has a first edge (52.1) forming the first opening (38), **characterized in that** the first enclosure (36) has at least one drainage orifice (62) that passes through the first enclosure (36), this being positioned on the first lateral wall (52), close to the first edge (52.1) of the first lateral wall (52), and **in that** the second enclosure (44) comprises at least one drainage hole (64) that passes through the second enclosure (44), each drainage orifice (62) and each drainage hole (64) being configured to limit an accumulation of fluid in the resonator (34).

2. Acoustic absorption structure according to Claim 1, **characterized in that** the first enclosure (36) comprises a single drainage orifice (62) and **in that** the resonator (34) is oriented in such a way that the drainage orifice (62) is located close to or at a lowest point of the first lateral wall (52) so as to limit the accumulation of liquid in the first cavity (40) during operation.

3. Acoustic absorption structure according to Claim 1, **characterized in that** the first enclosure (36) comprises multiple drainage orifices (62) distributed over the entire periphery of the first lateral wall (52) .

4. Acoustic absorption structure according to the preceding claim, **characterized in that** the first enclosure (36) comprises a number of drainage orifices (62), this number being between 4 and 12.

5. Acoustic absorption structure according to one of Claims 3 to 4, **characterized in that** each drainage orifice (62) has a diameter of between 0.8 and 2 mm.

6. Acoustic absorption structure according to one of the preceding claims, **characterized in that** the second enclosure (44) comprises a second lateral wall (58), delimited by a first edge (58.1) that is oriented towards the skin (32) and a second edge (58.2), and a second bottom wall (60) that is positioned at the second edge (58.2) of the second lateral wall (58), and **in that** each drainage hole (64) is positioned on the second bottom wall (60), close to the second lateral wall (58).

7. Acoustic absorption structure according to Claim 6, **characterized in that** the second enclosure (44) comprises a single drainage hole (64), and **in that** the resonator (34) is oriented in such a way that the drainage hole (64) is located close to or at a lowest point of the second bottom wall (60) so as to limit the accumulation of liquid in the second cavity (48) during operation.

8. Acoustic absorption structure according to Claim 6, **characterized in that** the second enclosure (44) comprises multiple drainage holes (64) distributed over the entire periphery of the second bottom wall (60) .

9. Acoustic absorption structure according to the preceding claim, **characterized in that** the second enclosure (44) comprises a number of drainage holes (64), this number being between 4 and 12.

10. Acoustic absorption structure according to one of Claims 6 to 9, **characterized in that** each drainage hole (64) has a diameter of between 0.8 and 2 mm.

11. Acoustic absorption structure according to one of the preceding claims, **characterized in that** the first and second enclosures (36, 44) have a shared axis of revolution (Ax), and **in that** each drainage orifice (62) intersects a longitudinal plane containing the axis of revolution (Ax) that also intersects a drainage hole (64).

12. Aircraft propulsion assembly comprising an acoustic absorption structure according to one of the preceding claims.

13. Aircraft comprising an acoustic absorption structure according to one of Claims 1 to 11.
